# DEMANDE DE BREVET EUROPEEN

(11) **EP 1 422 038 A1**
(43) Date de publication de la demande: **26.05.2004**
(21) Numéro de dépôt: 02026198.8
(22) Date de dépôt: 25.11.2002
(51) Int. Cl.: B29C 44/12, B29C 33/68

(54) **Procédé pour la fabrication de pièces moulées en mousse de matière plastique**

(71) Demandeur: NMC S.A., 4731 Raeren/Eynatten (BE)
(72) Inventeur: Lux, Alfred, 4700 Eupen (BE); Mayeres, Jean-Pierre, 4700 Eupen (BE)
(74) Mandataire: Kihn, Pierre Emile Joseph

(57) **Abrégé**

L'invention propose un procédé pour la fabrication de pièces moulées, en mousse (4) de matière plastique, fortement structurées sur leur face visible, ou profilées, lisses, ayant une densité apparente inférieure à 180kg/m³. Le procédé comprend les étapes suivantes:
(a) on pose entre deux moitiés d'un moule chauffé une feuille (3) mince, élastique, déformable à la chaleur, les bords de la feuille étant pincés entre les bords superposés des deux moitiés (1,2) du moule,
(b) par la partie supérieure (1) du moule, on introduit un mélange réactif de matière plastique moussante dégageant de la chaleur, de telle sorte qu'il puisse se répandre sur la feuille, et
(c) au cours de la formation de mousse, on fait un vide partiel entre la feuille et la moitié inférieure du moule, de telle sorte que la feuille échauffée par la chaleur émise par le mélange réactionnel soit serrée par la pression de la mousse, en combinaison avec le vide appliqué, en épousant étroitement les contours, sur la surface fortement structurée ou profilée de la moitié inférieure du moule.

Ledit procédé est caractérisé en ce que la feuille (3) est incompatible avec la mousse (4) et est arrachée entièrement après démoulage de la pièce moulée de manière à obtenir une pièce homogène.

## Description

L'invention concerne un procédé pour la fabrication de pièces moulées en mousse de matière plastique, fortement structurées sur leur face visible ou profilées, lisses, exemptes de soufflures et d'agents de démoulage dont la densité apparente est inférieure à 180 kg/m³.

Les pièces moulées de ce genre, par exemple sous la forme de profilés ornementaux de 2 m de long, qui, après leur pose comme finition murale de recouvrement, donnent l'impression de stuc, peuvent être fabriquées en introduisant le mélange de matière plastique qui doit former la mousse dans un moule en deux parties et en l'y faisant mousser. Le brevet belge No 901 682 propose un procédé pour la fabrication de pièces moulées, en mousse de matière plastique, fortement structurées sur leur face visible ou profilées, lisses, exemptes de soufflures et d'agent de démoulage, ayant une densité apparente inférieure à 200 kg/m3. Ce procédé comprend les étapes suivantes :
(a) on pose une feuille mince, élastique et déformable à la chaleur entre deux moitiés d'un moule chauffé,
b) on introduit dans le moule un mélange réactif de matière plastique moussante dégageant de la chaleur, de telle sorte qu'il puisse se répandre sur la feuille, et
(c) on fait au cours de la formation de mousse un vide partiel entre la feuille et la moitié inférieure du moule, de telle sorte que la feuille échauffée par la chaleur émise par le mélange réactionnel soit serrée par la pression de la mousse, en combinaison avec le vide appliqué, en épousant étroitement les contours, sur la surface fortement structurée ou profilée de la moitié inférieure du moule.

Dans ce procédé, la mousse se lie à la feuille de sorte qu'on obtient une pièce moulée composite qui comprend une feuille en matière plastique tel que le PVC ou le PU sur une de ces surfaces.

Un inconvénient de ce procédé réside dans le fait que les parties de la feuille qui servaient à maintenir la feuille à l'intérieur du moule et dépassant de ce fait la moulure doivent être enlevées. Cette opération est réalisée manuellement à l'aide d'un couteau ce qui entraîne parfois l'endommagement de la moulure, la feuille emportant avec elle un fragment de mousse cassé.

Pour pallier ces inconvénients, la présente invention propose un procédé pour la fabrication de pièces moulées, en mousse de matière plastique, fortement structurées sur leur face visible, ou profilées, lisses, ayant une densité apparente inférieure à 180 kg/m³. Le procédé comprend les étapes suivantes :
(a) on pose entre deux moitiés d'un moule chauffé une feuille mince, élastique, déformable à la chaleur, les bords de la feuille étant pincés entre les bords superposés des deux moitiés du moule,
(b) par la partie supérieure du moule, on introduit un mélange réactif de matière plastique moussante dégageant de la chaleur, de telle sorte qu'il puisse se répandre sur la feuille, et
(c) au cours de la formation de mousse, on fait un vide partiel entre la feuille et la moitié inférieure du moule, de telle sorte que la feuille échauffée par la chaleur émise par le mélange réactionnel soit serrée par la pression de la mousse, en combinaison avec le vide appliqué, en épousant étroitement les contours, sur la surface fortement structurée ou profilée de la moitié inférieure du moule,

Ledit procédé est caractérisé en ce que la feuille est incompatible avec la mousse et est arrachée entièrement après démoulage de la pièce moulée de manière à obtenir une pièce homogène.

Contrairement au procédé de l'état de la technique, on obtient une pièce homogène, non composite.

Pour être utilisées selon l'invention, toutes les feuilles de matière plastique minces, élastiques, déformables à la chaleur, conviennent, à condition qu'elles ne se lient pas à la mousse. Il est préféré d'utiliser des feuilles en polyoléfine, en particulier en polypropylène, en polyéthylène ou en leurs mélanges et copolymères. On utilisera d'une manière particulièrement préférée des feuilles et en LLDPE (polyéthylène linéaire basse densité). Ces matières ont l'avantage que la mousse de polyuréthane n'adhère pas à la feuille de sorte qu'on peut l'enlever sans efforts et sans endommager la pièce moulée. Par ailleurs, la feuille ne laisse pas de dépôts ou traces à la surface de la pièce moulée. La netteté des motifs est préservée.

On utilisera de préférence une feuille PE qui est plus fine (inférieure à 100 microns, de préférence inférieure à 60 microns contre 180 à 200 microns) et moins chère que la feuille PVC ou PU utilisée dans les procédés de l'état de la technique.

L'élasticité et la flexibilité supérieures de la feuille en polyoléfine et en particulier de la feuille en PE permet un remplissage encore meilleur des formes et motifs du moule inférieur. Les motifs sont ainsi mieux définis.

Comme il n'y a plus besoin d'assurer une adhérence entre la mousse et la feuille PE, il en résulte des exigences moindres sur le moussage, en ce sens que la mousse ne doit plus exercer une aussi forte pression pour avoir une parfaite adhérence avec la feuille. De ce fait, il est possible d'abaisser la densité de la mousse. En effet, grâce aux conditions moins strictes sur la pression à réaliser sur la feuille PE, on passe de 180-200 kg/m³ à 160-180 kg/m³ selon les modèles de moulures.

Dans l'exécution du procédé, le moule, ou ses deux moitiés sont maintenues à une température de 35 à 50°C. A cet effet, il est prévu, dans les moitiés du moule, des conduits parcourus par un fluide chauffé de façon appropriée. Comme la feuille en PE utilisée est plus flexible que les feuilles utilisées dans les procédés de l'état de la technique, il est possible d'abaisser la température des moules thermostatisés et de réduire ainsi la consommation d'énergie.

Sont particulièrement recommandés, comme mélanges de matières plastiques pouvant donner une mousse, les mélanges à deux composants qui fournissent une mousse dure de polyuréthane. De la même façon, il peut être utilisé aussi les résines époxydes donnant une mousse, ainsi que les résines à base de phénol donnant une mousse.

Au point de vue de la fabrication des mousses dures de polyuréthane, on se reportera, par exemple, au Kunsttoffhandbuch, Band VII, Polyuréthane de Vieweg/Höchtlen (Karl Hanser Verlag München 1966) et à la littérature qui y est indiquée.

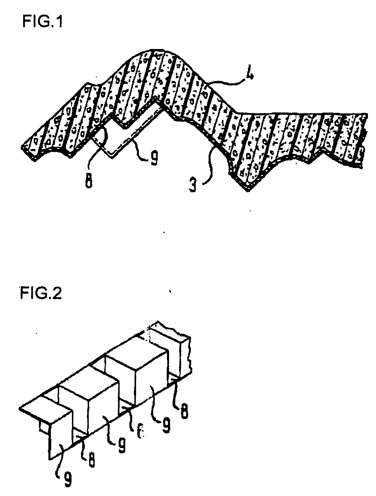

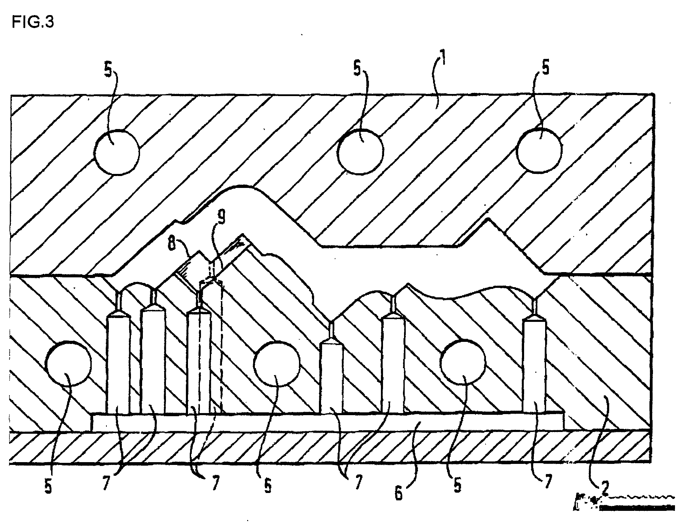

L'invention sera exposée ci-après avec référence aux figures 1 à 3 et à l'exemple non limitatif décrit ci-dessous :

Les références ci-dessous sont utilisées dans le texte et les figures :
- (1) moitié supérieure du moule, - (2) moitié inférieure du moule, - (3) feuille, - (4) mousse, - (5) canaux de chauffage, - (6) chambre à vide, - (7) buse de vide,- (8) évidements, - (9) saillies.

- La figure 1 montre, en coupe transversale, un profil décoratif en mousse 4 immédiatement après sa sortie du moule avec une feuille 3 qui est arrachée dans une étape ultérieure, où sont pratiqués sur l'axe transversal des évidements 6 et saillies 9 supplémentaires. Ces évidements 8 et saillies 9 ne peuvent être produits que par une opération de fabrication discontinue, car ils ne peuvent être fabriqués, suivant un mode de fabrication continu, c'est-à-dire par extrusion. L'évidement 8, représenté en figure 1, et la saillie 9, ne se trouvent pas dans un plan de coupe, comme le montre la figure, mais bien l'un derrière l'autre. Les évidements 8 et les saillies 9 peuvent être réalisés comme il est représenté schématiquement en figure 2, ou être des ornements.

La figure 2 montre, dans une représentation schématique, en perspective, les évidements 8 et les saillies 9, des évidements et saillies de ce genre pouvant aussi avoir la forme d'ornements.

La figure 3 montre, en coupe transversale, un moule qui est constitué d'une moitié supérieure 1 et d'une moitié inférieure 2, qui sont pourvues de canaux de chauffage. Dans la moitié inférieure 2 se trouve, en outre, la chambre à vide 6 avec la buse à vide 7.

### Exemple

Les deux moitiés du moule qui sont faites, de préférence, en fonte d'aluminium, ou en un autre métal, ou en un alliage sont amenées à la température voulue au moyen d'un fluide, par les serpentins de chauffage appropriés. Dans la moitié inférieure qui contient le négatif de la structure, est posée une feuille de matière plastique mince très élastique qui n'adhère pas ou très peu à la mousse. La moitié supérieure est mise en place comme il est courant. Après avoir fermé le moule, le mélange réactionnel est injecté. Suivant le réglage du moment de démarrage, le mélange réactionnel commence à mousser et se répand dans tout le moule. Quand cette répartition est terminée, c'est-à-dire quand le moule est plein de mousse, il s'établit une certaine pression. Sous son effet, la feuille est poussée sur les parois du moule. Des pièces ainsi fabriquées ont des arêtes qui ne sont pas très vives, en particulier sur les évidements importants. Pour éviter ce défaut ou y remédier, quand la pression monte dans le moule, on fait agir le vide dans le moule entre la moitié inférieure du moule et la feuille. Cette dépression aide à amener la feuille en contact avec le moule sur toutes les étendues et dans les angles. Le vide appuie ainsi la pression de la mousse avec en même temps un moussage uniforme. Comme la feuille est d'abord aplatie dans le moule et ne prend la forme des contours que sous la pression de la mousse, la formation de soufflures sur la surface est totalement exclue. D'autre part, la feuille sert en même temps de couche de séparation entre la mousse et la moitié inférieure du moule.

Comme mélange de mousse, on utilise un système à deux composants donnant une mousse dure de polyuréthane.

Après avoir sortie le profilé du moule, la feuille est arrachée et on obtient un profilé homogène en polyuréthane.

Il est ainsi possible, suivant la façon décrite, de fabriquer des profils décoratifs longs, des plaques à décors circulaires et des images en relief.

## Revendications

1. Procédé pour la fabrication de pièces moulées, en mousse de matière plastique, fortement structurées sur leur face visible, ou profilées, lisses, ayant une densité apparente inférieure à 180 kg/m³, comprenant les étapes suivantes :
(a) on pose entre deux moitiés d'un moule chauffé une feuille mince, élastique, déformable à la chaleur, les bords de la feuille étant pincés entre les bords superposés des deux moitiés du moule,
(b) par la partie supérieure du moule, on introduit un mélange réactif de matière plastique moussante dégageant de la chaleur, de telle sorte qu'il puisse se répandre sur la feuille, et
(c) au cours de la formation de mousse, on fait un vide partiel entre la feuille et la moitié inférieure du moule, de telle sorte que la feuille échauffée par la chaleur émise par le mélange réactionnel soit serrée par la pression de la mousse, en combinaison avec le vide appliqué, en épousant étroitement les contours, sur la surface fortement structurée ou profilée de la moitié inférieure du moule,
**caractérisé en ce que** la feuille est incompatible avec la mousse et est arrachée entièrement après démoulage de la pièce moulée de manière à obtenir une pièce homogène.

2. Procédé suivant la revendication 1, **caractérisé en ce qu'**il est utilisé une feuille en polyoléfine, en particulier en polypropylène, en polyéthylène ou en leurs mélanges et copolymères.

3. Procédé suivant la revendication 1, **caractérisé en ce qu'**il est utilisé une feuille dont l'épaisseur est inférieure à 100 microns, de préférence inférieure à 60 microns.

4. Procédé suivant l'une des revendications 1 à 3, **caractérisé en ce que** les deux moitiés du moule sont chauffées à une température de 35 à 50°C.

5. Procédé suivant l'une quelconque des revendications 1 à 4, **caractérisé en ce qu'**il est utilisé, comme mélange de matière plastique moussant, un mélange à deux composants donnant une mousse dure de polyuréthane.
